Europäisches Patentamt

(19) European Patent Office

Office européen des brevets

(11) EP 0 541 816 B1

(12) **EUROPEAN PATENT SPECIFICATION**

(45) Date of publication and mention
of the grant of the patent:
**12.11.1997 Bulletin 1997/46**

(21) Application number: **92909559.4**

(22) Date of filing: **27.04.1992**

(51) Int. Cl.$^6$: **B32B 7/02**, B29C 43/18,
B29C 43/20, B60K 37/00,
B29C 70/00

(86) International application number:
**PCT/JP92/00547**

(87) International publication number:
**WO 92/19446 (12.11.1992 Gazette 1992/28)**

(54) **MULTILAYER MOLDED PIECE AND METHOD FOR MANUFACTURING THE SAME**

MEHRSCHICHTIGER FORMTEIL UND VERFAHREN ZUR HERSTELLUNG

ARTICLE MULTICOUCHE MOULE ET PROCEDE DE FABRICATION

(84) Designated Contracting States:
**BE DE ES FR GB IT NL**

(30) Priority: **25.04.1991 JP 95265/91**

(43) Date of publication of application:
**19.05.1993 Bulletin 1993/20**

(73) Proprietors:
• **SUMITOMO CHEMICAL COMPANY LIMITED**
**Osaka-shi, Osaka 541 (JP)**
• **SUIRYO PLASTICS CO., LTD.**
**Asakuchi-gun, Okayama 710-02 (JP)**

(72) Inventors:
• **HARA, Takahisa**
**Kawanishi-shi, Hyogo 666-01 (JP)**
• **MATSUMOTO, Masahito**
**Ibaraki-shi, Osaka 567 (JP)**
• **NAKADA, Hitoshi**
**Kibi-gun, Okayama 710-13 (JP)**

(74) Representative: **VOSSIUS & PARTNER**
**Postfach 86 07 67**
**81634 München (DE)**

(56) References cited:
**EP-A- 0 466 179         EP-A- 0 480 153**
**JP-A- 1 141 011         JP-A- 1 235 613**
**JP-A- 6 426 414         JP-A-59 150 740**
**JP-A-62 297 123         JP-A-63 159 022**
**JP-A-63 251 206**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a method for producing a multilayer molded article comprising laminating a composite skin layer which has been beforehand formed from a skin material and a foam sheet and a core layer of a thermoplastic resin, and a multilayer molded article produced by this method.

A large amount of plastic molded articles are used in various fields including automobiles and domestic electric equipments in view of its economy, free moldability and light weight. With the increase of diversification of the applications, varieties of appearance of the products are required. In particular, in these years, it has been strongly desired to impart a decorative effect and soft feeling to the product. Hitherto, many studies have been made to provide a compound which has functions satisfying such desires. However, it is difficult for a single material to have the above surface properties while maintaining free moldability and strength. At present, a large number of multilayer molded articles in which several materials having different functions are combined are usually used.

Among the multilayer molded articles, a multilayer molded article having a foam layer between the core layer and the skin material is excellent in soft feeling, and various types of such articles are proposed.

Hitherto, as a method for producing such multilayer molded article, there is proposed a method comprising placing a composite skin layer which comprises a skin material and a foam sheet between molds, supplying a molten resin when the molds are not closed and then closing the molds to obtain the multilayer molded article (see JP-A-1-235613/1989).

Though the above method is an industrially advantageous method, when it is used to produce an article having a complicated shape such as an instrument panel of an automobile, the skin layer tends to suffer from breakages, wrinkles and debossing.

An object of the present invention is to solve the above problems of the prior arts and provide a method for producing a multilayer molded article which has a good appearance without breakages, wrinkles or debossing in its skin layer.

This object is solved with the features of the claims. In particular, it has been found that, by the use of a composite skin layer comprising a skin material which has the specific properties before lamination, a multilayer molded article having fairly good appearance is obtained even if the article is a large size one having a complicated shape, and the present invention has been completed. Accordingly, the present invention as described in claim 1 provides a method for producing a multilayer molded article comprising laminating a composite skin layer which is preformed from a skin material and a foam sheet on a core layer of a thermoplastic resin, characterized in that a tensile modulus E of said skin material of the composite skin layer is not larger than 95 MPa (950 kg/cm$^2$), and a tensile modulus E in MPa (kg/cm$^2$), a heat shrinkage factor F (%) and a thickness t (cm) of said skin material satisfy the following relationship (1):

$$2/(E \times t) + F \geq 2.5 \qquad (1)$$

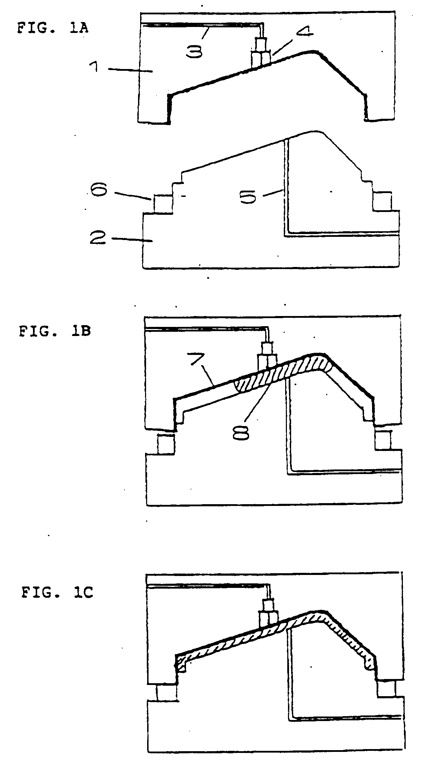

Figs. 1A to 1C show cross sectional views of the molding apparatus in various steps of the molding method according to the present invention.

The thermoplastic resin to be used as the core layer according to the present invention is not limited and any of those conventionally used in compression molding, injection molding and extrusion molding may be used. Examples of the thermoplastic resin are thermoplastic resins such as polypropylene, polyethylene, polystyrene, acrylonitrile-styrene-butadiene copolymer and polyamide; and thermoplastic elastomers such as ethylene-propylene block copolymer and styrene-butadiene block copolymer. A thermoplastic resin containing an additive such as a filler (e.g. an inorganic filler or glass fibers), a pigment, a lubricant, an antistatic agent, and the like may be used.

As the skin material which forms a part of the composite skin layer used in the present invention, there are exemplified sheets made of a thermoplastic resin (e.g. polyolefin, polyvinyl chloride, polyamide, etc.) and a thermoplastic elastomer (e.g. polyolefin, polyester, polystyrene, etc.). An embossed sheet is preferably used as a leather-like sheet.

As the foam sheet which forms a part of the composite skin layer used in the present invention, there are exemplified foam sheets of polypropylene foam, polyethylene foam, polyurethane foam and the like. The thickness of the foam sheet is preferably from 1.5 to 10 mm. When the thickness of the foam sheet is smaller than 1.5 mm, the cushioning property is insufficient, while when the thickness is larger than 10 mm, the cost performance is disadvantageous. The expansion ratio of the foam sheet is from 3 to 40 times. When the expansion ratio is smaller than 3 times, the cushioning property is insufficient. When the expansion ratio is larger than 40 times, the foam sheet is too soft unpreferably.

In the present invention, the composite skin layer which is preformed from the skin material and the foam sheet is used. For preforming the composite skin layer, the skin material and the foam sheet may be adhered with an adhesive or fusion bonded. For example, in a case where the olefinic thermoplastic elastomer sheet is used as the skin material and the polypropylene foam sheet is used as the foam sheet, when the olefinic thermoplastic elastomer sheet is produced using a T-die, one of a pair of rolls for nip cooling of the sheet form molten elastomer is embossed and the polypropylene foam sheet is supplied between the other roll and the molten elastomer, whereby the composite skin layer which has an embossed surface and is lined wish the polypropylene foam sheet is produced in one step.

To produce a multilayer molded article having a complicated form such as an instrument panel, in general, the produced composite skin layer is premolded by conventional thermoforming and used. In this case, preferably, a mold used in the premolding has a shape such that an inner surface shape of a female mold used in the press molding conforms to the outer surface shape of the premolded composite skin layer.

The multilayer molded article of the present invention is produced by positioning the composite skin layer between upper and lower mold, supplying the resin melt between the foam sheet of the composite skin layer and either one of the molds, closing the molds and pressing and cooling the molds. One of the important factors in the present invention is that the composite skin layer comprises the skin material having, before being contacted to the resin melt, the tensile modulus E of not larger than 95 MPa (950 kg/cm$^2$), and the tensile modulus E in MPa (kg/cm$^2$), the heat shrinkage factor F (%) and the thickness t (cm) which satisfy the above relationship (1).

The composite skin layer can be prepared by bonding the skin material which satisfies all of the above requirements to the foam sheet, for example, with an adhesive, or laminating a skin material which does not originally satisfy the above requirements on the foam sheet and thermoforming the laminate to impart heat history to the skin material. Among the above preparation methods, in the former one, since it is difficult to purchase a skin material which satisfies all of the above requirements, the properties are adjusted by selecting compositions or components of a usual skin material, or heating the skin material and then cooling down to room temperature, or heating the skin material in an expanded state and then cooling it, or controlling its thickness. However, such methods require the pretreatment of the skin material. Therefore, the latter method, that is, the premolding method comprising laminating the skin material which does not originally satisfy the above requirements on the foam sheet and thermoforming the laminate, is preferred. Needless to say, a skin material which does not satisfy any of the above requirements even after the above pretreatment is not suitable for the production of the multilayer molded article of the present invention.

The tensile modulus of the skin material is measured according to JIS K7113 using a No. 2 test sample at a pulling rate of 200 mm/min. The heat shrinkage factor is calculated from a size change before and after keeping the skin material in an oven at 80°C for 5 minutes and maintaining it at room temperature for 12 hours. In the case of the skin material which is composited in the premolded composite skin layer, the properties are measured with the skin material after removing the foam sheet.

The multilayer molded article of the present invention is produced by positioning the composite skin layer between unclosed upper and lower mold, supplying the resin melt between the foam sheet of the composite skin layer and either one of the molds, closing the molds and pressing and cooling the molds. In the method of the present invention, to avoid the damage of the composite skin layer, timings of the resin melt supply and the mold closing are important. Preferably, the resin melt is supplied through a resin passage formed in one of the upper and lower molds at a mold closing rate of 30 mm/sec. or less, when a cavity clearance between the upper and lower molds is from (C + 5) mm to (C + 100) mm in which C is a cavity clearance at the completion of the molding). Thereafter, the molds are closed till the clearance reaches C mm, pressed and cooled for a determined time, whereby the desired multilayer molded article is produced.

## EXAMPLES

The present invention will be illustrated by the following Examples, which do not limit the scope of the present invention.

## Example 1

The molding was carried out using a vertical pressing machine having a clamping force of 2 x 10$^6$ N (200 tons) to which molds for producing an instrument panel having a length of 1500 mm were attached as shown in Fig. 1.

As the skin material, an embossed polyvinyl chloride sheet having a thickness of 0.7 mm (manufactured by Kyowa Leather Co., Ltd.) was used, and on the skin material, a polypropylene foam sheet having a thickness of 3.0 mm and an expansion ratio of 15 times (PPSM 15030 manufactured by TORAY CO., LTD.) was bonded with an adhesive. Using a far infrared heater, the composite sheet was heated to 160°C on the skin material surface and 135°C on the polypropylene foam sheet surface. Then, the lower mold was lifted and the polypropylene foam sheet side of the composite skin layer was sucked onto the lower mold having vacuum suction holes on its surface. The composite skin layer was then cooled with a fan to finish premolding. At this time, the polyvinyl chloride sheet after removing the polypropylene foam sheet had a tensile modulus of 24,4 MPa (244 kg/cm$^2$) and a heat shrinkage factor of 1.49. This composite skin layer premolded by thermoforming was used.

As a thermoplastic resin, polypropylene (SUMITOMO NOBLEN BP 697 K manufactured by Sumitomo Chemical Co., Ltd.; a melt flow index of 30 g/min.) was used. It was heated and supplied in the molds for molding. The upper and lower molds were heated at 30°C and 40°C, respectively.

The composite skin layer 7 which had been positioned between the upper and lower molds 1 and 2 was sucked on the surface of the upper mold 1 through a vacuum suction hole 3.

The upper mold 1 was lowered at a rate of 200 mm/sec. When the cavity clearance between the upper and lower molds reached 70 mm, the lowering rate of the upper mold 1 was decreased to 6 mm/sec. and simultaneously, the resin melt 6 heated and molten at 200°C was supplied between the foam sheet side of the composite skin layer 7 and the lower mold 2 through a resin passage 5 which is provided in the lower mold. When the cavity clearance reached 40 mm, the supply of the resin melt was finished. As the upper mold 1 was further lowered, the resin melt 8 flowed between the composite skin layer 7 and the surface of the lower mold and reached the edges of the cavity to fill the mold cavity. The molds were pressed and cooled for 40 seconds and the upper mold 1 was lifted up. The desired molded article was removed to obtain the good appearance multilayer molded article having no wrinkles, breakage or uneven marks on the surface.

Examples 2 and 3

Under the same conditions as in Example 1 except that a polyvinyl chloride sheet shown in Table 1 was used as a skin material, the molding was carried out. As in Example 1, the good appearance multilayer molded article which was covered with the embossed skin material having no wrinkles, breakage or uneven marks was obtained.

Comparative Examples 1, 2 and 3

Under the same conditions as in Example 1 except that a polyvinyl chloride sheet shown in Table 1 was used as a skin material, the molding was carried out. Different from the molded article produced in the above Examples, a poor appearance multilayer molded article having uneven marks and the like was obtained.

Table 1

| Example No. | Skin material | | | | | 2/Et + F | Surface appearance of the molded article |
|---|---|---|---|---|---|---|---|
| | Thickness (mm) | Raw material | | After premolding | | | |
| | | Tensile modulus MPa $(kg/cm^2)$ | Heat shrinkage factor (%) | Tensile modulus MPa $(kg/cm^2)$ | Heat shrinkage factor (%) | | |
| 1 | 0.7 | 23.1 (231) | 0.37 | 24.4 (244) | 1.49 | 2.66 | O |
| 2 | 0.7 | 16.4 (164) | 0.47 | 16.0 (160) | 1.23 | 3.02 | O |
| 3 | 0.7 | 18.7 (187) | 0.25 | 14.0 (140) | 2.30 | 4.34 | O |
| C. 1 | 0.7 | 96.3 (963) | 0.05 | 87.0 (870) | 0.88 | 1.21 | X |
| C. 2 | 0.7 | 46.3 (463) | 0.66 | 49.9 (499) | 0.36 | 0.93 | X |
| C. 3 | 0.7 | 19.9 (199) | 0.86 | 19.5 (195) | 0.58 | 2.05 | X |

According to the present invention, it is possible to produce a multilayer molded article having good appearance and no wrinkles, breakage or uneven marks in the skin material on the molded article surface, even in a case of a large and complicated shaped article.

**Claims**

1. A method for producing a multilayer molded article comprising the steps of:

   a) positioning a composite skin layer (7) which is preformed from a skin material and a foam sheet between upper and lower mold (1, 2),
   b) supplying a thermoplastic resin melt (8) between the foam sheet of the composite skin layer (7) and either one of the molds (1, 2), and
   c) closing the molds (1, 2) to obtain the multilayer molded article, characterized in that the tensile modulus E of said skin material of the composite skin layer is not larger than 95 MPa (950 $kg/cm^2$), and the tensile mod-

ulus E in MPa ($kg/cm^2$), the heat shrinkage factor F (%) and the thickness t (cm) of said skin material (7) satisfy the following relationship (1):

$$2 /(E \times t) + F \geq 2.5 \qquad (1)$$

2. A multilayer molded article obtainable by a method as claimed in claim 1.

3. The multilayer molded article according to claim 2, which is an instrument panel of an automobile.

**Patentansprüche**

1. Verfahren zur Herstellung eines mehrschichtigen Formteils, das die folgenden Schritte aufweist:

   a) Positionieren einer zusammengesetzten Oberflächenschicht (7), die aus einem Oberflächenmaterial und einer Schaumlage vorgeformt wird, zwischen einer oberen und einer unteren Form (1, 2)
   b) Zuführen einer thermoplastischen Kunstharzschmelze (8) zwischen die Schaumlage der zusammengesetzten Oberflächenschicht (7) und eine der Formen (1, 2) und
   c) Schließen der Formen (1, 2), um das mehrschichtige Formteil zu erhalten,
      dadurch gekennzeichnet, daß der Zugmodul E des Oberflächenmaterials der zusammengesetzten Oberflächenschicht nicht größer als 95 MPa (950 $kg/cm^2$) ist, und der Zugmodul E in MPa ($kg/cm^2$), der Wärmeschrumpfungsfaktor F (%) und die Dicke t (cm) des Oberflächenmaterials (7) die folgende Beziehung (1) erfüllen:

$$2/(E \times t) + F \geq 2,5 \qquad (1)$$

2. Mehrschichtiges Formteil, das durch ein Verfahren nach Anspruch 1 erhältlich ist.

3. Mehrschichtiges Formteil nach Anspruch 2, das ein Armaturenbrett eines Automobils ist.

**Revendications**

1. Procédé pour la production d'un article moulé multicouches, comprenant les étapes consistant à :

   a) positionner une couche de peau composite (7) qui est préformée à partir d'un matériau de peau et d'une feuille de mousse entre des parties de moules supérieure et inférieure (1, 2),
   b) appliquer une résine thermoplastique fondue (8) entre la feuille de mousse de la couche de peau composite (7) et l'une ou l'autre des parties de moule (1, 2), et
   c) fermer les parties de moule (1, 2) de façon à obtenir l'article moulé multicouches,
      caractérisé en ce que le module de traction E dudit matériau de peau de la couche de peau composite n'est pas supérieur à 95 MPa (950 $kg/cm^2$) et le module de traction E, en MPa ($kg/cm^2$), le facteur de retrait thermique (F) (%) et l'épaisseur t (cm) dudit matériau de peau (7) satisfont à la relation suivante (1) :

$$2/(E \times t) + F \geq 2,5 \qquad (1)$$

2. Article moulé multicouches, pouvant être obtenu par le procédé selon la revendication 1.

3. Article moulé multicouches selon la revendication 2, qui est un tableau de bord d'une automobile.

FIG. 1A

FIG. 1B

FIG. 1C